**Europäisches Patentamt**

**European Patent Office**

**Office européen des brevets**

(11) Veröffentlichungsnummer: **0 158 895**
**A2**

(12) # EUROPÄISCHE PATENTANMELDUNG

(21) Anmeldenummer: **85103760.6**

(22) Anmeldetag: **28.03.85**

(51) Int. Cl.⁴: **C 04 B 35/00**

(30) Priorität: **14.04.84 DE 3414153**

(43) Veröffentlichungstag der Anmeldung:
**23.10.85 Patentblatt 85/43**

(84) Benannte Vertragsstaaten:
**BE DE FR GB IT LU NL SE**

(71) Anmelder: **DYNAMIT NOBEL AKTIENGESELLSCHAFT**
**Postfach 1261**
**D-5210 Troisdorf, Bez. Köln(DE)**

(72) Erfinder: **Flessner, Gerd**
**Heinrich v. Kleist-Strasse 8**
**D-5450 Neuwied-12(DE)**

(72) Erfinder: **Spiess, Gerhart, Dr.**
**Beethovenstrasse 36**
**D-5410 Höhr-Grenzhausen(DE)**

(72) Erfinder: **Weissenfels, Franz, Dr.**
**Am Grafenkreuz 17**
**D-5200 Siegburg(DE)**

(54) **Verfahren zur Herstellung feuerfester Steine oder anderer Formkörper.**

(57) Die Erfindung betrifft ein Verfahren zur Herstellung weitgehend witterungsbeständiger, kunstharzgebundener, feuerfester Steine oder anderer Formkörper aus einem rieselfähigen, üblicherweise wasserhaltigen Gemisch hochtemperaturbeständiger, anorganischer Grundstoffe durch Zugabe von 0,1 bis 20 Gew. –%, bezogen auf das Gemisch der anorganischen Grundstoffe, Kunstharzen bei Raumtemperatur. Als Kunstharze werden ein flüssiges Phenolharz vom Resol-Typ, ein pulverförmiges Phenolharz vom Novolaktyp, ein flüssiges Furanharz oder Gemische dieser Harze eingesetzt, gegebenenfalls in Anwesenheit eines katalytisch oder chemisch wirksamen Härters.

EP 0 158 895 A2

Troisdorf, den 11.04.1984
OZ: 84018    (4330) Me/P.

DYNAMIT NOBEL AKTIENGESELLSCHAFT

5210 Troisdorf

Verfahren zur Herstellung feuerfester Steine oder
anderer Formkörper

Die Erfindung betrifft ein Verfahren zur Herstellung
weitgehend witterungsbeständiger, kunstharzgebundener,
feuerfester Steine oder anderer Formkörper.

Bei der Herstellung feuerfester Steine oder anderer Formkörper sind folgende Methoden bekannt (siehe Harders,
Kienow: Feuerfestkunde, Springer-Verlag, 1960):

1.
Verwendung einer keramischen Bindung, bei der die feuerfesten Hartstoffe mit feuerfestem Ton gebunden und dann
gebrannt werden.

2.
Verwendung einer chemischen Bindung, bei der die feuerfesten Hartstoffe, gegebenenfalls in Gegenwart feuerfester
Tone, mit z.B.:

- 2 -

a) Phosphorverbindungen, z.B. auf der Basis von
Aluminiumphosphat,

b) Alkalisilikaten (Wassergläsern),

c) Teeren und Pechen gebunden werden. Gemäß der DE-OS 28 22 653 ist auch bereits ein durch Hitze erhärtendes organisches Bindemittel für feuerfeste Massen und Formkörper auf der Basis von Phenol-Resol-Harzen und Tallöl bekannt.

3.
Verwendung einer hydraulischen Bindung, bei der die feuerfesten Hartstoffe, gegebenenfalls in Gegenwart von feuerfestem Ton, mit feuerfesten Zementen gebunden werden.

4.
Verwendung einer arteigenen Bindung, z.B. bei schmelzgegossenen Steinen.

Es ist bekannt, bei der Bindung feuerfester Steine oder anderer Formkörper zusätzlich organische Hilfsmittel, z.B. Preßhilfsmittel, Verformungshilfsmittel (wie z.B. Polyvinylacetate, Dextrine, Polyvinylalkohole, Zelluloseverbindungen), einzusetzen.

Die genannten Verfahren weisen folgende Nachteile auf:

1.
Bei der Herstellung feuerfester Steine oder anderer Formkörper mit keramischer Bindung ist ein energieaufwendiger Primärbrand erforderlich.

2.
Phosphorhaltige Bindemittel sind teuer und erfordern Tempertemperaturen von 280 bis 400$^{\circ}$C.

0158895

Bei den oben (unter 2a bis 2c) genannten chemischen Bindungen kann oder muß - je nach Art der Zusammensetzung - bereits bei der Herstellung der Steine bzw. Formkörper eine zusätzliche Temperung bei 300 bis 800$^{o}$C erfolgen bzw. ein Brand notwendig sein.

3.
Die nach bekannten Verfahren hergestellten Mischungen für die Fertigung feuerfester Steine oder anderer Formkörper müssen bei Verwendung der oben genannten chemischen Bindemittel innerhalb kurzer Zeit verarbeitet werden. Sie weisen eine geringe sogenannte Topfzeit auf.

4.
Bindungssysteme mit z.B. hydraulischer Bindung können am Einsatzort infolge des höheren Wassergehalts nur langsam aufgeheizt werden bzw. müssen in einem Sonderverfahren vorgetrocknet werden.

Der Erfindung liegt die Aufgabe zugrunde, bei einem Verfahren der im Oberbegriff des Patentanspruchs 1 bezeichneten Art die aufgeführten Nachteile zu vermeiden. Diese Aufgabe wird durch die kennzeichnenden Merkmale des Anspruchs 1 gelöst. Vorteilhafte Ausgestaltungen der Erfindung sind in den Ansprüchen 2 bis 10 angegeben.

In den Ansprüchen 11 und 12 sind die vorzugsweisen Anwendungen der erfindungsgemäßen Produkte dargelegt. Anspruch 13 umfaßt die neuen, erfindungsgemäßen Produkte. Bei dem erfindungsgemäßen Verfahren werden zunächst Gemische aus in der Feuerfestindustrie üblichen, hochtemperaturbeständigen, anorganischen Grundstoffen, wie z.B. Bauxiten, Andalusiten, Zirkoniumsilikaten, Zirkoniumdioxiden, Magnesiten, Dolomiten, Graphiten, Kaolinen, Sillimaniten, Mulliten, Korunden, Quarziten, Spinellen, Siliciumcarbiden, Siliciumnitriden,

Schamotten, Tonen und/oder Rohcyaniten mit Phenolharzen vom Resol- oder Novolak-Typ und/oder Furanharzen, gegebenenfalls in Gegenwart katalytisch oder chemisch wirksamer Härter, hergestellt.

Der Anteil der Kunstharze beträgt 0,1 bis 20 Gew.-%, vorzugsweise 0,5 bis 5 Gew.-%, bezogen auf das Gewicht der anorganischen Rohstoffe. Bezüglich der Harze kann ein Phenolharz vom Resol-Typ mit einem Phenolharz vom Novolak-Typ oder mit einem Furanharz gemischt sein. Das Phenolharz vom Resol-Typ wird gegebenenfalls zusammen mit einem Härter eingesetzt, den anderen Harzen und Harzmischungen wird auf jeden Fall ein Härter zugegeben.

Als Phenol-Resol-Harze werden dabei solche flüssigen, wasserhaltigen Kondensationsprodukte verstanden, die aus Phenol und Formaldehyd im Bereich eines Molverhältnisses von Phenol zu Formaldehyd von 1:1,2 bis 1:3,0 in Gegenwart von alkalischen Katalysatoren gebildet werden und die sowohl einer Warm- bzw. Heißhärtung als auch einer exotherm verlaufenden Härtung unter dem katalytischen Einfluß von Säuren zugängig sind. Vorzugsweise wird ein flüssiges Phenol-Resol-Harz in Kombination mit säurehaltigen Härtern eingesetzt, dessen Viskosität (nach Hoeppler) bei 20°C im Bereich von 100 bis 2000 cp und dessen Festharzgehalt im Bereich von 63 bis 78 Gew.-% liegt sowie welches die Eigenschaft hat, bei Zusatz von Säuren in einer exothermen Reaktion zu härten.

Typische, sowohl katalytisch als auch chemisch wirksame, Härter sind organische Sulfonsäuren, wie z.B. p-Toluolsulfonsäure.

Als Novolak-Harze werden solche bei Raumtemperatur festen Kondensationsprodukte aus Phenol und Formaldehyd verstanden, die im Bereich eines Molverhältnisses von Phenol zu Formaldehyd von 1 : kleiner als 1, vorzugsweise 1:0,6 bis 1:0,9 ,in Gegenwart von sauren Katalysatoren gebildet werden. Diese Novolak-Harze sind nur in Gegenwart eines Härters, z.B. Hexamethylentetramin, einer irreversiblen Härtung bzw. Bindung zugängig. Der dafür notwendige Zusatz an Hexamethylentetramin beträgt 4-20 Gew.-%, berechnet auf das Novolak-Harz. Die Novolak-Harze werden bei der Herstellung der erfindungsgemäßen Produkte gegebenenfalls in Lösung, z.B. in Alkoholen oder Ketonen gelöst, eingesetzt.

Als Furanharze werden solche flüssigen, furfurylalkoholhaltigen Kondensationsprodukte verstanden, die sich aus Furfurylalkohol und Furfurol im Bereich eines Molverhältnisses von 1:0,8 bis 1:1,5 unter dem katalytischen Einfluß von Säuren bilden. Diese Furanharze sind unter dem katalytischen Einfluß von Säuren, wie z.B. p-Toluolsulfonsäure,in einer stark exotherm verlaufenden Reaktion härtbar. Vorzugsweise wird ein flüssiges Furanharz in Kombination mit säurehaltigen Härtern eingesetzt, dessen Viskosität (nach Hoeppler) bei 20°C im Bereich von 100 bis 1000 cp und dessen Festharzgehalt im Bereich von 50 bis 65 Gew.-% liegt.

Die erfindungsgemäßen Gemische enthalten gegebenenfalls zusätzlich organische Hilfsmittel, wie z.B. Preßhilfsmittel, Verformungshilfsmittel.

Die Gemische aus den oben genannten feuerfesten Grundstoffen mit Zusätzen der oben genannten Kunstharze und sonstigen Bestandteile werden durch Verdichtung bei Raumtemperatur und Drücken von 10 bis 200 N/mm$^2$ zu Steinen oder anderen Formkörpern verpreßt oder gegebenenfalls verstampft und dann durch Wärmebehandlung bis maximal 200°C, vorzugsweise bei 20 bis 170°C,während eines Zeitraums von einer Stunde bis zu 4 Tagen, so gebunden, daß die Steine oder anderen Formkörper eine solche Festigkeit aufweisen, daß sie hinreichend lager- und transportfähig sind. Dies beinhaltet auch eine hinreichende Witterungs- und insbesondere Wasserbeständigkeit. Es wurde überraschenderweise gefunden, daß derartige Steine oder andere Formkörper sich nach dem Vermauern und erstem Aufheizen problemlos in die keramische Bindung überführen lassen. Dabei wurde weiter gefunden, daß die Festigkeit im Übergangsbereich (200 - 800°C) bis zum Einsetzen der keramischen Bindung bei Temperaturen oberhalb 800°C durch den oben beschriebenen Kunstharzzusatz unerwarteterweise vorteilhaft erhöht wird. Die nach dem erfindungsgemäßen Verfahren hergestellten Steine oder anderen Formkörper weisen vorzugsweise nach dem Verpressen bzw. Verstampfen und Härten eine Kaltdruckfestigkeit von mindestens 10 N/mm$^2$ auf. Der Kunstharzanteil in den Steinen oder anderen Formkörpern wird beim ersten Aufheizen auf Temperaturen oberhalb 200°C zum Teil zu unter den gegebenen Bedingungen gasförmigen Produkten zersetzt und zum anderen Teil letztlich graphitisiert.

Die Erfindung beinhaltet ein neuartiges Bindungssystem, welches im wesentlichen unabhängig von den herkömmlichen feuerfesten Grundstoffen ist. Derartige Grundstoffe können also mit den in der Feuerfestindustrie üblichen Zusammensetzungen und Körnungsaufbauten mit einem der erfindungsgemäßen Bindungssysteme versehen werden. Dabei ist zu beachten, daß die Gesamtzusammensetzung so gewählt wird, daß keine Brennschwindung erfolgt. Dieses wird üblicherweise z.B. bei einer sich im Erstbrand durch Ton/Kaolin-Zugaben bildenden keramischen Bindung dadurch erzielt, daß der Anteil an Ton bzw. Kaolin, die üblicherweise die hohe Schwindung verursachen, gering gehalten wird ( ca. 10 Gew.-% ). Zur Förderung des Nachwachsens im Brand kann z.B. bei Schamotte-, Andalusit-, Sillimanit-, Mullit-, Bauxit- und Korundsteinen eine geringe Menge (z.B. 1-10 Gew.-%) an feinem Rohcyanit zugegeben werden.

Es besteht auch die Möglichkeit, völlig ohne Ton/Kaolin zu arbeiten und die Hartstoffe nur mit Kunstharz zu binden. In einer besonderen Ausgestaltung des Verfahrens sind im Gemisch der anorganischen Grundstoffe 0 bis 30 Gew.-%, vorzugsweise 1 bis 10 Gew.-%, Tone und/oder Kaoline enthalten, wobei der Graphitgehalt maximal 50 Gew.-% beträgt.

Die nach dem erfindungsgemäßen Verfahren hergestellten feuerfesten Steine oder anderen Formkörper werden bevorzugt zur Auskleidung von Gefäßen zum Vergießen von Metallschmelzen, insbesondere Stahlschmelzen, sowie zur Auskleidung von thermisch hoch beanspruchten Prozeßaggregaten, wie z.B. Gießpfannen, Torpedopfannen und Konverter, eingesetzt. Sie dienen weiterhin der Auskleidung von Transportgefäßen in der Stahl- und Nichteisenmetall-Industrie.

Das erfindungsgemäße Verfahren weist folgende Vorteile auf:

a) Bei der Herstellung der Steine ist kein Primärbrand notwendig, dadurch wird Energie eingespart:

b) Für die Herstellung der erfindungsgemäßen Steine oder anderen Formkörper ist eine Temperaturbehandlung bis vorzugsweise 170°C ausreichend, so daß die herkömmlichen Trocknungsaggregate zur Herstellung dieser Steine benutzt werden können und keine neuen Temperungsaggregate für höhere Temperaturen notwendig sind. Ein weiterer Vorteil ist, daß Härtungs-und Trocknungstemperatur im selben Bereich liegen.

c) Aus b) ergibt sich als weiterer Vorteil, daß die Steine nach dem Verformen direkt auf unbehandelte Holzpaletten versandfertig abgelegt werden können. Hierdurch wird ein Arbeitsgang eingespart . Bei Temperaturen über 200°C zeigen unbehandelte Holzpaletten Zersetzungserscheinungen, d.h. nach konventionellen Verfahren hergestellte Steine können nicht sofort nach dem Verformen auf solchen Paletten abgelegt werden.

d) Es ist bekannt, daß sich ein Kohlenstoffgehalt in feuerfesten Produkten positiv (qualitätssteigernd) auf die Verschlackungsbeständigkeit und Feuerfestigkeit auswirkt und der Infiltration von flüssigen Metallschmelzen entgegenwirkt. Die erfindungsgemäßen Steine oder anderen Formkörper zeigen infolge ihrer Zersetzungscharakteristik den typischen Vorteil einer Graphitisierung bzw. eines inneren Gasdruckes.

e) Die Verarbeitungszeit (= Topfzeit: Zeit von der Herstellung der Mischung bis zur Verformung) der feuerfesten Massen zur Herstellung der Steine oder anderen Mischungen sowie die Härtungstemperatur können über den Harz- und gegebenenfalls Härterzusatz in weiten Grenzen variiert und so den verschiedenen betrieblichen Bedingungen angepaßt werden.

f) Gegenüber den herkömmlichen chemisch/keramisch und hydraulisch/keramisch gebundenen ungebrannten Steinen oder anderen Formkörpern ist die Bindung der erfindungsgemäßen Steine im allgemeinen kostengünstiger.

g) Weiter sind folgende Umstände bei der Herstellung der erfindungsgemäßen Steine oder Formkörper vorteilhaft:

g1) Möglichkeit der Herstellung von kohlenstoff-, insbesondere graphithaltigen Steinen durch Graphitzusatz und Temperaturbehandlung bis vorzugsweise 170°C, d.h. ohne einen reduzierenden Primärbrand bei höheren Temperaturen.

g2) Durch den geringen chemisch gebundenen Wassergehalt der erfindungsgemäßen Steine oder anderen Formkörper kann am Einsatzort eine höhere Aufheizungsgeschwindigkeit erreicht werden, d.h. schnellere Verfügbarkeit eines mit derartigen Steinen ausgerüsteten Aggregates.

g3) Die erfindungsgemäß hergestellten Steine sind weitgehend witterungsbeständig. Sie bleiben nach sechsmonatiger Bewitterung in mitteleuropäischem Klima formstabil und kantenfest.

Die Erfindung wird nachstehend anhand der Beispiele näher erläutert.

Tabelle 1 gibt die Eigenschaftswerte der für die Versuche eingesetzten Harze an.
Die Bestimmung der Eigenschaftswerte der in den Beispielen benutzten Phenol- und Furanharze wurde wie folgt durchgeführt:

Festharzgehalt
2-3 g Harz wurden auf 0,0001 g genau in einer Metallschale (Durchmesser 50 mm, Höhe 10 mm) eingewogen und waagerecht stehend für 90 Minuten in einem Umlufttrocken-

- 10 -

schrank bei 150°C belassen. Nach Erkalten der Probe in einem Exsikkator wurde zurückgewogen, um den Gewichtsverlust zu ermitteln.

## Viskosität
Die Messung der Viskosität erfolgte mit einem Kugelfall-Viskosimeter nach Hoeppler (s. DIN 53015).

## Schmelzbereich
Der Schmelzbereich wurde nach dem Kapillar-Verfahren nach DIN 53181 bestimmt. Das Aufheizen der Probe erfolgte mit einem Temperaturanstieg von $2 \pm 0,2°C$/min. ohne Unterbrechung.

## Gelierzeit, B-Zeit$_{130°C}$ / 150°C
Sie ist die Zeit, die das Harz benötigt, um aus dem flüssigen bzw. geschmolzenen Zustand irreversibel in einen gelatinösen, gummiartigen Zustand überzugehen.

In einer Kalotte (Durchmesser 20 mm, Tiefe 10 mm), die in eine thermostatisch auf 130°C bzw. 150°C beheizte Eisenplatte eingearbeitet ist, wurden ca. 150 mg Harz gegeben, und anschließend wurde durch Rühren mit einem spitz ausgezogenen Glasstab festgestellt, wann die Harzprobe gelierte. Dieser Punkt ist erreicht, wenn sich durch Herausziehen des Stabes aus dem Harz kein Faden mehr ziehen läßt, sondern das Harz von der Stabspitze abreißt, weil es gallertartig geworden ist.

## Fließstrecke bei 125°C
Sie ist die Länge in mm, die eine zu einer Tablette verpreßte 1-g-Probe auf einer 125°C heißen Glasplatte, mit 60° Neigung im Wärmeschrank stehend, bis zur Eigenhärtung durchfließt. Der Tablettendurchmesser von 12,25 mm wird bei Angabe der Fließstrecke mitgemessen.

Tabelle 1

| | Phenol-Resolharz A | Furanharz B | Phenol-Novolak C | Phenol-Novolak-Hexa-Gemisch D |
|---|---|---|---|---|
| Form | flüssig | flüssig | flüssig | pulverförmig |
| Festharzgehalt (Gew.-%) | 65-70 | 53 | 66 | 98 |
| Lösungsmittel | Wasser | Furfuryl-alkohol | Ethanol | - |
| Viskosität bei 20°C (m P. s) | 205 | 310 | 2300 | - |
| Schmelzbereich (°C) | - | - | - | 81-84 |
| Gelierzeiten B 130°C (Min) | - | - | - | 12 |
| B 150°C (Min) | 2,2 | - | - | - |
| Fließstrecke (mm) bei 125°C | - | - | - | 71 |

0158695

0158895

| Tabelle 2 | Versuch Nr. | | 1 | 2 | 3 | 4 | 5 | 6 | 7 | 8 | 9 | 10 |
|---|---|---|---|---|---|---|---|---|---|---|---|---|
| 1 Andalusit | 0-3 mm | Gew.% | 88 | 88 | 88 | 88 | 83 | | 88 | 88 | 88 | 88 |
| 2 Bauxit | 0-3 mm | " | | | | | | 88 | | | | |
| 3 Rohcyanit | 0-0,2mm | " | 2 | 2 | 2 | 2 | 2 | 2 | 2 | 2 | 2 | 2 |
| 4 Graphit | 0-0,2 mm | " | | | | | 5 | | | | | |
| 5 Ton | 0-0,1 mm | " | 10 | 10 | 10 | 10 | 10 | 10 | 10 | 10 | 10 | 10 |
| 6 Wasser | | " | 3,2 | 4,0 | 3,5 | 3,8 | 3,8 | 3,5 | 4,0 | 2,5 | 2,5 | 4,0 |
| 7 p-Toluolsulfonsäure (65 Gew.-%) | | " | 0,2 | | | 0,1 | 0,2 | 0,2 | 2,5 | 0,4 | | |
| 8 Phenol-Resol-Harz A | | " | 1,8 | | 1,8 | 0,7 | 1,8 | 1,8 | 5,0 | | | |
| 9 Furanharz B | | " | | | | | | | | 3,0 | | |
| 10 Hexamethylentetramin | | " | | | | | | | | | 0,3 | |
| 11 alkoholische Novolak-Lösung C | | " | | | | | | | | | 3,0 | |
| 12 Novolak-Hexa-Gemisch D | | " | | | | | | | | | | 2,0 |
| 13 Härtungstemp. °C | | | 140 | 140 | 160 | 140 | 140 | 140 | 80 | 80 | 170 | 170 |
| 14 Härtungszeit Std. | | | 24 | 24 | 24 | 24 | 24 | 24 | 12 | 12 | 12 | 12 |
| Messungen nach Härtung | | | | | | | | | | | | |
| 15 Kaltdruckfestigkeit N/mm² | | | 22 | 10 | 20 | 15 | 15 | 21 | 26 | 26 | 28 | 16 |
| 16 Druckfeuerbeständigkeit ta°C | | | 1720 | 1710 | 1720 | 1710 | 1730 | 1530 | 1680 | 1700 | 1700 | 1690 |
| 17 Wasserfestigkeit a) % | | | 100 | 0 | 100 | 80 | 100 | 100 | 100 | 100 | 100 | 100 |
| 18 b) Verlust Gew.-% | | | 0,0 | 100 | 0,0 | 3,2 | 0,1 | 0,0 | 0,5 | 0,2 | 0,1 | 0,4 |
| 19 Brenntemperatur °C | | | 1500 | 1500 | 1500 | 1500 | 1500 reduziert | 1380 | 1500 | 1500 | 1500 | 1500 |
| Messungen nach dem Brand | | | | | | | | | | | | |
| 20 Kaltdruckfestigkeit N/mm² | | | 65 | 60 | 62 | 60 | 46 | 68 | 35 | 42 | 38 | 40 |
| 21 Druckfeuerbeständigkeit ta°C | | | 1700 | 1700 | 1700 | 1700 | 1720 | 1530 | 1680 | 1690 | 1690 | 1690 |
| 22 Nachwachsen im Brand % (Längenänderung nach dem Brand) | | | +1,4 | +1,4 | +1,4 | +1,4 | +1,2 | +1,3 | +1,3 | +1,4 | +1,4 | +1,4 |
| 23 Erläuterungen der Rezeptvarianten (siehe auch Seite 15) | | | Standard | Null-Versuch | Resol ohne Härter | geringe Menge Resol + Härter Grenze der Wasserfest. | Rohstoffvariante z. Standard | Rohstoffvariante z. Standard | höherer Harz A-Härter-Zusatz | Kunstharzbindung auf Basis Furanharz B | Kunstharzbindung auf Basis alkohol. Novolak-Lösung C | Kunstharzbindung auf Basis Novolak-Hexa-Gemisch D |

0158895

## Versuchsbeschreibung

Die in Tabelle 2 aufgeführten Versuche werden nachfolgend näher beschrieben:

Bei den feuerfesten Rohstoffen (Andalusit bis Ton = Zeilen 1 bis 5) handelt es sich um übliche, in der Feuerfest-Industrie eingesetzte Qualitäten mit einem für die Verdichtung optimierten Körnungsspektrum.

In einem 10l-Labormischer werden die Hartstoffe (Zeilen 1 bis 3) zunächst mit Wasser angefeuchtet. Unter ständigem Mischen werden dann Graphit und Ton und nach 3 Minuten zunächst die Härter (Zeilen 7 und 10) und dann die Harze zugegeben. Gesamtmischzeit ca. 10 Minuten. Anschließend erfolgt eine Verformung zu Probekörpern mit einer hydraulichen Laborpresse mit einem konstanten Preßdruck von je 80 N/mm$^2$. Die zylindrischen Probekörper weisen einen Durchmesser von 50 mm und eine Höhe von 50 mm auf, wie von den nachfolgenden DIN-Normen gefordert.

Die Härtung erfolgt in einem Trockenschrank.

Die Kaltdruckfestigkeit wird nach DIN 51067 bestimmt.

Die Druckfeuerbeständigkeit wird nach DIN 51064 bestimmt.

Die Wasserfestigkeit (Zeilen 17 und 18) ist als die Festigkeit des Steines nach 24-stündiger, getauchter Lagerung in leicht fließendem, kaltem Leitungswasser und anschließender Trocknung bei 110°C zu verstehen. In Zeile 17 bedeutet dabei 100%, daß ein so getesteter Stein die ursprüngliche Form aufweist, keine oder nur wenige Körnchen abgefallen sind und die Kantenfestigkeit erhalten geblieben ist. 0% bedeutet, daß der Stein bereits innerhalb 1 Stunde unter den oben beschriebenen Bedingungen zerfällt. 80% bedeutet, daß der Stein innerhalb 24 Stunden an den Ecken und Kanten abbröselt, insgesamt die ursprüngliche Form aber beibehält.

- 14 -

Es handelt sich bei der Wasserfestigkeit nach Zeile 17 um eine eigene, willkürliche Festlegung, da ein genormtes Verfahren nicht bekannt ist.

Es wurde ferner der prozentuale Gewichtsverlust (Zeile 18) im Anschluß an die oben ermittelte Wasserlagerung und Trocknung ermittelt.

Im Rahmen der Wasserfestigkeitsprüfungen konnte ferner ermittelt werden, daß

a)   die Probekörper nach der oben beschriebenen Wasserlagerung und Trocknung eine gleich große oder geringfügig höhere Kaltdruckfestigkeit als vor der Wasserfestigkeitsprüfung aufwiesen,

b)   eine einstündige getauchte Lagerung in kochendem Wasser zu vergleichbaren wie oder leicht ungünstigeren Ergebnissen als die oben beschriebene Wasserfestigkeitsprüfung führt.

Der Brand der Probekörper ist in einem gasbefeuerten Tunnelofen mit einer Haltezeit auf Brenntemperatur von konstant 24 Stunden durchgeführt worden.

0158895

Anmerkungen zu Versuch Nr.:


1. Standardversuch

Mit 1,8 Gew.-% Phenol-Resol-Harz A und 0,2 Gew.-%
p-Toluolsulfonsäure als Härter, Verarbeitungszeit auf
ca. 1 Tag begrenzt.


2. Null-Versuch ohne Kunstharzbindung

Wie ersichtlich, führt ein fehlender Kunstharzzusatz
zu einer völlig fehlenden Wasserfestigkeit und einer
verminderten Kaltdruckfestigkeit.


3. Phenol-Resol-Harz A, ohne Härterzusatz, also
reine Temperaturhärtung Dieses Gemisch zeigt im Vergleich zu Versuch 1 eine
längere Verarbeitungszeit (ca. 2 Wochen) und eine leicht
erhöhte Kaltdruckfestigkeit.


4.

Der reduzierte Zusatz von Phenol-Resol-Harz A und Härter
führt zu Steinen mit verminderter Wasserfestigkeit.


5. bis 6.

Varianten in bezug auf die feuerfesten Grundstoffe.


7.

Versuch mit einem höheren Härter/Harz A-Verhältnis, kann
zur Reduzierung der Härtungstemperatur und der Härtungszeit bei verkürzter Verarbeitungszeit (ca. 1 Stunde)
des Gemisches ausgenutzt werden.

8.-10.

Die Versuchsergebnisse zeigen, daß die erfindungsgemässen Eigenschaften auch bei Verwendung der obengenannten
Furan- und Novolak-Harze erreicht werden.

Troisdorf, den 11.04.1984
Me/P. - OZ: 84018 (4330)

Patentansprüche:

1. Verfahren zur Herstellung weitgehend witterungsbeständiger, kunstharzgebundener, feuerfester Steine oder anderer Formkörper, dadurch gekennzeichnet, daß

a)
einem rieselfähigen, üblicherweise wasserhaltigen Gemisch hochtemperaturbeständiger, anorganischer Grundstoffe 0,1 bis 20 Gew.-%, bezogen auf das Gemisch der anorganischen Grundstoffe, folgender Kunstharze bei Raumtemperatur untergemischt werden:

a1)
flüssiges Phenolharz vom Resol-Typ oder

a2)
pulverförmiges Phenolharz vom Novolak-Typ oder

a3)
flüssiges Furanharz oder

a4)
ein Gemisch aus a1 und a2 oder

a5)
ein Gemisch aus a1 und a3,

wobei im Fall a1 gegebenenfalls, in den Fällen a2 bis a5 auf jeden Fall ein katalytisch oder chemisch wirksamer Härter anwesend ist, und gegebenenfalls zusätzlich organische Hilfsmittel, wie z.B. Preßhilfsmittel, Verformungshilfsmittel, enthalten sind,

- 2 -

0158895

b)

das gemäß a) erhaltene erdfeuchte Gemisch bei Raumtemperatur und Drücken von 10 bis 200 N/mm$^2$ zu Steinen oder anderen Formkörpern verpreßt oder gegegebenenfalls verstampft und anschließend durch Erwärmen auf 20 bis 200°C die Kunstharzbindung hergestellt wird.

c) die gemäß b) hergestellten, weitgehend witterungsbeständigen, transportfähigen Steine oder anderen Formkörper nach ihrer Verarbeitung am Einsatzort erstmalig auf über 200°C und anschließend auf Temperaturen oberhalb 800°C aufgeheizt werden.

2. Verfahren nach Anspruch 1, dadurch gekennzeichnet, daß als anorganische Grundstoffe z.B. Bauxite, Andalusite, Zirkoniumsilikate, Zirkoniumdioxide, Magnesite, Dolomite, Graphite, Kaoline, Sillimanite, Mullite, Korunde, Quarzite, Spinelle, Siliciumcarbide, Siliciumnitride, Schamotte, Tone und/oder Rohcyanite eingesetzt werden.

3. Verfahren nach Anspruch 1 oder 2, dadurch gekennzeichnet, daß der Kunstharzanteil 0,5 bis 5 Gew.-% des Gemisches der anorganischen Grundstoffe, die Härtungstemperatur 20 bis 170°C und die Härtungszeit eine Stunde bis 4 Tage beträgt.

4. Verfahren nach einem der Ansprüche 1 bis 3, dadurch gekennzeichnet, daß ein flüssiges Phenol-Resol-Harz in Kombination mit säurehaltigen Härtern eingesetzt wird, dessen Viskosität (nach Hoeppler) bei 20°C im Bereich von 100 bis 2000 cp und dessen Festharzgehalt im Bereich von 63 bis 78% liegt sowie welches die Eigenschaft hat, bei Zusatz von Säuren in einer exothermen Reaktion zu härten.

5. Verfahren nach einem der Ansprüche 1 bis 4, dadurch gekennzeichnet, daß ein pulverförmiges Phenolharz vom Novolak-Typ in Gegenwart von 4 bis 20 Gew.-% Hexamethylentetramin, bezogen auf das Phenolharz, als Härter eingesetzt wird.

6. Verfahren nach einem der Ansprüche 1 bis 4, dadurch gekennzeichnet, daß ein flüssiges Furanharz in Kombination mit säurehaltigen Härtern eingesetzt wird, dessen Viskosität (nach Hoeppler) bei 20°C im Bereich von 100 bis 1000 cp und dessen Festharzgehalt im Bereich von 50 bis 65% liegt.

7. Verfahren nach einem der Ansprüche 1 bis 4 oder 6, dadurch gekennzeichnet, daß der Härter p-Toluolsulfonsäure enthält.

8. Verfahren nach einem der Ansprüche 1 bis 7, dadurch gekennzeichnet, daß die Steine oder anderen Formkörper nach dem Verpressen bzw. Verstampfen und Härten eine Kaltdruckfestigkeit von mindestens 10 N/mm$^2$ nach DIN 51067 aufweisen.

9. Verfahren nach einem der Ansprüche 1 bis 8, dadurch gekennzeichnet, daß im Gemisch der anorganischen Grundstoffe 0 bis 30 Gew.-%, vorzugsweise 1 bis 10 Gew.-%, Tóne und/oder Kaoline enthalten sind sowie der Graphitgehalt maximal 50 Gew.-% beträgt.

10. Verfahren nach einem der Ansprüche 1 bis 9, dadurch gekennzeichnet, daß im Gemisch der anorganischen Grundstoffe 1 bis 10 Gew.-% feiner Rohcyanit enthalten ist.

- 4 -

11. Verwendung der nach einem der Ansprüche 1 bis 10 hergestellten feuerfesten Steine oder anderen Formkörper zur Auskleidung von Gefäßen zum Vergießen von Metallschmelzen, vorzugsweise Stahlschmelzen.

12. Verwendung der nach einem der Ansprüche 1 bis 10 hergestellten feuerfesten Steine oder anderen Formkörper zur Auskleidung von thermisch hoch beanspruchten Prozeßaggregaten.

13. Feuerfeste Steine oder andere Formkörper, hergestellt aus einem rieselfähigen, üblicherweise wasserhaltigen Gemisch hochtemperaturbeständiger, anorganischer Grundstoffe, welches 0,1 bis 20 Gew.-%, bezogen auf das Gemisch der anorganischen Grundstoffe, folgender Kunstharze bei Raumtemperatur enthält:

a1) flüssiges Phenolharz vom Resol-Typ    oder

a2) pulverförmiges Phenolharz vom Novolak-Typ oder

a3) flüssiges Furanharz    oder

a4) ein Gemisch aus a1 und a2    oder

a5) ein Gemisch aus a1 und a3,

wobei im Fall a1 gegebenenfalls, in den Fällen a2 bis a5 auf jeden Fall ein katalytisch oder chemisch wirksamer Härter anwesend ist, und gegebenenfalls zusätzlich organische Hilfsmittel, wie z.B. Preßhilfsmittel, Verformungshilfsmittel, enthalten sind.